# EUROPÄISCHE PATENTANMELDUNG

(11) **EP 3 789 437 A1**
(43) Veröffentlichungstag der Anmeldung: **10.03.2021**
(21) Anmeldenummer: 19196064.0
(22) Anmeldetag: 06.09.2019
(51) Int. Cl.: C08J 5/04, F16J 15/10, F16J 9/28

(54) **DICHTELEMENT UND/ODER STÜTZRING AUS DRUCKGEPRESSTEM CARBONFASERVERSTÄRKTEM VERBUNDWERKSTOFF**

(71) Anmelder: Burckhardt Compression AG, 8404 Winterthur (CH)
(72) Erfinder: Voser, Alexandre, 8352 Elsau (CH)
(74) Vertreter: Dr. Graf & Partner AG

(57) **Zusammenfassung**

Die vorliegende Erfindung betrifft ein Dichtelement und/oder einen Stützring insbesondere für einen Kolbenkompressor gefertigt durch Formpressen von einer Mischung von Schnitzeln aus carbonfaserverstärktem Verbundwerkstoff, wobei zumindest ein Teil der Schnitzel Carbonfasern mit einer Länge von 3 bis 20 mm enthält.

## Beschreibung

Die vorliegende Erfindung betrifft ein Dichtelement und/oder einen Stützring insbesondere für einen Kolbenkompressor gefertigt durch Formpressen von einer Mischung von Schnitzeln aus carbonfaserverstärktem Verbundwerkstoff, ein Verfahren zur Herstellung eines solchen Dichtelements und/oder Stützrings sowie einen Kolbenkompressor, welcher wenigstens ein solches Dichtelement und/oder einen solchen Stützring enthält.

Dichtelemente, wie Kolben- oder Packungsringe, Führungsringe, wie Kolbenführungsringe, sowie Führungsdichtringe, wie Kolbenführungsdichtringe, müssen eine Vielzahl von Anforderungen erfüllen, um ihre Aufgabe zu erfüllen. Insbesondere müssen diese eine geeignete Härte, eine ausreichend hohe Zugfestigkeit, eine ausreichend hohe Reißdehnung, ein gutes Formanpassungsvermögen, eine hohe Alterungsbeständigkeit, eine geringe Druckkriech- und Kaltflussneigung, eine hervorragende chemische Beständigkeit, eine exzellente Temperaturbeständigkeit und - je nach Anwendung - ggf. eine hohe Ozonbeständigkeit aufweisen. Beispielsweise ist ein gutes Formanpassungsvermögen erforderlich, um die Funktion des Dichtelementes sicherzustellen, selbst wenn sich dieses bewegt. Zudem sind eine geringe Druckkriech- und Kaltflussneigung wesentlich, um eine irreversible plastische Verformung im kalten Zustand unter Belastung auch nach langer Betriebsdauer zu vermeiden.

Aufgrund dessen guten Eigenschaften werden Dichtelemente häufig aus Zusammensetzungen auf Basis von Polytetrafluorethylen (PTFE) hergestellt. PTFE zeichnet sich beispielsweise durch einen außergewöhnlich breiten thermischen Anwendungsbereich aus, ist nahezu universell chemisch beständig und weist eine hervorragende Beständigkeit gegen Licht, Witterung und Heißwasserdampf auf. Zudem zeichnet sich PTFE durch sehr gute Gleiteigenschaften, ein hervorragendes antiadhäsives Verhalten, durch gute elektrische und durch gute dielektrische Eigenschaften aus. Zur Verringerung des Kaltflusses und Verbesserung der mechanischen Eigenschaften wird PTFE allerdings in der Regel nicht in reiner Form, sondern mit Füllstoffen verstärkt eingesetzt. Als Füllstoffe werden beispielsweise Kohle-, Graphit-, Molybdandisulfid- oder Bronzepartikel eingesetzt. In jüngerer Zeit werden für diesen Zweck vermehrt faserverstärkte Verbundwerkstoffe mit einer PTFE-Matrix eingesetzt, in die Fasern, wie Glasfasern, Carbonfasern oder Aramidfasern, eingebettet sind. Solche Materialien auf Basis von PTFE sind allerdings aufgrund deren begrenzten mechanischen Stabilität auf Anwendungen der Dichtelemente bzw. Stützringe im unteren Druckbereich limitiert. Für Anwendungen bei höheren Drücken werden entsprechende Materialien auf Basis von Hochleistungspolymeren verwendet, wie beispielsweise Polyimid, Polyaryletherketon, Polyphenylensulfid oder Polyetheretherketon (PEEK). Zum Beispiel werden für diesen Zweck carbonfaserverstärkte Kunststoffe (CFK), wie solche mit einer Matrix aus PEEK, in welche 10 Gew.-% Carbonfasern eingebettet sind, eingesetzt.

Üblicherweise werden Dichtelemente und Stützringe aus derartigen carbonfaserverstärkten Kunststoffen durch Spritzguss hergestellt, und zwar unter Verwendung von Carbonkurzfasern typischerweise mit einer Länge von maximal 1 mm. Solche Kurzfasern haben den Vorteil, dass sie sich der Kontur des herzustellenden Bauteils entsprechend ausrichten und nicht aus der Oberfläche des hergestellten Bauteils hervorstehen. Es ist auch bekannt, solche Bauteile durch Sintern aus einem Granulat herzustellen, in dem typischerweise Kurzfasern mit einer Faserlängen von etwa 0,1 mm eingesetzt werden. Das Granulat wird unter Druck gesintert, wobei sich die Fasern im Innern des hergestellten Bauteils befinden. Ein Nachteil der so hergestellten Dichtelemente und Stützringe ist jedoch deren verbesserungsbedürftige Festigkeit, deren vergleichsweise geringe Dichtigkeit und zu hohe und inhomogene Wärmeausdehnung.

Ausgehend davon lag der vorliegenden Erfindung die Aufgabe zugrunde, ein Dichtelement bzw. einen Stützring bereitzustellen, welches bzw. welcher eine erhöhte Festigkeit aufweist, sich durch eine höhere Dichtigkeit, eine verbesserte niedrige und besonders homogene Wärmeausdehnung auszeichnet und insbesondere zur Verwendung in einem Kolbenkompressor geeignet ist.

Erfindungsgemäß wird diese Aufgabe gelöst durch ein Dichtelement und/oder Stützring insbesondere für einen Kolbenkompressor gefertigt durch Formpressen von einer Mischung von Schnitzeln aus carbonfaserverstärktem Verbundwerkstoff, wobei zumindest ein Teil der Schnitzel Carbonfasern mit einer Länge von 3 bis 20 mm enthält.

Diese Lösung basiert auf der überraschenden Erkenntnis, dass ein Dichtelement und/oder Stützring gefertigt durch Formpressen von einer Mischung von Schnitzeln aus carbonfaserverstärktem Verbundwerkstoff, wobei zumindest ein Teil der Schnitzel Carbonfasern mit einer Länge von 3 bis 20 mm enthält, nicht nur eine erhöhte Festigkeit aufweist, sondern sich insbesondere durch eine höhere Dichtigkeit, eine verbesserte niedrige und besonders homogene Wärmeausdehnung auszeichnet. Bei dem Formpressen werden die Schnitzeln aus carbonfaserverstärktem Verbundwerkstoff in die Kavität einer Form eingebracht und anschließend die Kavität aufgeheizt sowie unter Einsatz eines Druckkolbens geschlossen, wodurch die Formmasse in die durch die Kavität vorgegebene Form gepresst wird. Indem die kleinen Schnitzel in die Kavität geschüttet werden, ordnen sich diese zufällig an, so dass sich in dem fertigen Bauteil eine zufällige Faserorientierung ergibt, das heißt in dem fertigen Bauteil in alle Richtungen weisende Carbonfasern enthalten sind. Dadurch werden Dichtelemente und Stützringe mit zumindest weitgehend anisotropen Eigenschaften erhalten. Insbesondere zeichnen sich die erfindungsgemäßen Dichtelemente und Stützringe durch eine vergleichsweise homogene Wärmeausdehnung aus, wobei die Wärmeausdehnung in der Pressrichtung geringfügig höher als in der Querrichtung dazu ist. Zudem zeichnen sich die erfindungsgemäßen Dichtelemente und Stützringe durch eine sehr geringe Wärmeausdehnung insbesondere in der Querrichtung zu der Pressrichtung aus, die im Bereich von der von Stahl liegt. In der Pressrichtung entspricht die Wärmeausdehnung der des die Matrix des carbonfaserverstärkten Verbundwerkstoffs bildenden Kunststoffs. Aufgrund der geringen Wärmeausdehnung ist nur ein kleineres Spiel zwischen Dichtelemente bzw. Stützringe und abzudichtendem bzw. zu stützenden Bauteil, wie zwischen Kolbenstange und Stützring, erforderlich, so dass konstante, schmale Spalte resultieren. Auch die Gefahr für eine lokale Erhitzung während des Betriebs und damit für ein Verklemmen ist dadurch kleiner. Das Material dehnt sich bei einer Erwärmung weniger aus, wohingegen herkömmliche Stützringe bei einer Erwärmung aufquellen und infolge dessen die Kolbenstange berühren, was zu einer Reibung zwischen Stützring und Kolbenstange sowie zu einer gegenseitigen Erwärmung führt. Auch die mechanischen Eigenschaften der erfindungsgemäßen Dichtelemente und Stützringe sind relativ homogen. Ferner zeichnen sich die erfindungsgemäßen Dichtelemente und Stützringe durch eine höhere Dichtigkeit aus. Man kann daher entsprechend hergestellte Ventilplatten läppen, was zu einer ganz feinen Oberfläche führt. Die Platten sind zudem sehr schlagfest, sind sehr temperaturfest, haben einen tiefen Temperaturkoeffizienten und sind leicht. Schließlich war es unerwartet, dass die Carbonfasern trotz ihrer vergleichsweise großen Länge von 3 bis 20 mm nicht aus dem Dichtelement bzw. Stützring herausstehen und infolge dessen an einem andren Bauteil, wie z. B. einer Kolbenstange, reiben. Vielmehr hat sich im Rahmen der vorliegenden Erfindung gezeigt, dass die Carbonfasern an ihren Enden zerbröseln, wenn diese aus dem Bauteil hervorstehen. Aus all diesen Gründen ist das erfindungsgemäße Dichtelement bzw. der erfindungsgemäße Stützring insbesondere zur Verwendung in einem Kolbenkompressor geeignet.

Erfindungsgemäß wird das Dichtelement bzw. der Stützring aus Schnitzeln aus carbonfaserverstärktem Verbundwerkstoff gefertigt, wobei zumindest ein Teil der Schnitzel Carbonfasern mit einer Länge von 3 bis 20 mm enthält. Wenn die Länge der Carbonfasern weniger als 3 mm beträgt, werden die Vorteile der vorliegenden Erfindung, wie erhöhte Festigkeit sowie geringe und homogene Wärmeausdehnung, nicht mehr in dem gewünschten Ausmaß erhalten. Sofern die Carbonfasern länger als 20 mm sind, ergibt sich bei dem Formpressen nicht mehr eine ausreichend hohe Faserzufallsorientierung in dem Bauteil, so dass eine Homogenität der Eigenschaften nicht einem gewünschten Ausmaß erreicht wird.

Erfindungsgemäß enthält zumindest ein Teil der Schnitzel Carbonfasern mit einer Länge von 3 bis 20 mm. Um die vorgenannten Vorteile der vorliegenden Erfindung in eine hohen Ausmaß zu erreichen, wird es in Weiterbildung des Erfindungsgedankens vorgeschlagen, dass wenigstens 50%, weiter bevorzugt wenigstens 60% oder 70%, besonders bevorzugt wenigstens 80% und ganz besonders bevorzugt wenigstens 90% der bei dem Formpressen eingesetzten Schnitzel Carbonfasern mit einer Länge von 3 bis 20 mm aufweisen.

Höchst bevorzugt enthalten alle bei dem Formpressen eingesetzten Schnitzel Carbonfasern mit einer Länge von 3 bis 20 mm.

Neben den Carbonfasern mit einer Länge von 3 bis 20 mm können die Schnitzel auch Carbonfasern mit einer anderen Länge enthalten. Allerdings ist es bevorzugt, dass in jedem Schnitzel, welches Carbonfasern mit einer Länge von 3 bis 20 mm enthält, wenigstens 50%, weiter bevorzugt wenigstens 60% oder 70%, besonders bevorzugt wenigstens 80% und ganz besonders bevorzugt wenigstens 90% der enthaltenen Carbonfasern eine Länge von 3 bis 20 mm aufweisen. Weiter bevorzugt weisen alle Carbonfasern von jedem Schnitzel, welches Carbonfasern mit einer Länge von 3 bis 20 mm enthält, eine Länge von 3 bis 20 mm auf.

Höchst bevorzugt weisen alle in dem Formpressen eingesetzten Schnitzel ausschließlich Carbonfasern mit einer Länge von 3 bis 20 mm. Darunter wird im Sinne der vorliegenden Erfindung verstanden, dass jede der in den Schnitzeln enthaltenen Carbonfasern eine Länge zwischen 3 und 20 mm aufweist, wobei jedoch nicht notwendiger weise die Länge aller Fasern gleich lang sein muss, sofern eben jede Carbonfaser eine Länge zwischen 3 und 20 mm aufweist. Ein Schnitzel enthaltend erste Carbonfasern mit einer Länge von jeweils 5 mm, zweite Carbonfasern mit einer Länge von jeweils 10 mm sowie dritte Carbonfasern mit einer Länge von jeweils 15 mm ist mithin ein Schnitzel enthaltend ausschließlich Carbonfasern mit einer Länge von 3 bis 20 mm.

Bei allen vorgenannten Ausführungsformen ist es insbesondere bevorzugt, wenn die Schnitzel, welche Carbonfasern mit einer Länge von 3 bis 20 mm enthalten, Carbonfasern mit einer Länge von 3 bis 10 mm enthalten.

Um eine gute Zufallsorientierung bei dem Befüllen der zum Formpressen eingesetzten Form zu erhalten, wird es in Weiterbildung des Erfindungsgedankens vorgeschlagen, nicht zu große Schnitzel einzusetzen. Gute Ergebnisse werden insbesondere mit Schnitzeln erzielt, die zumindest im Wesentlichen plättchenförmig mit einem zumindest im Wesentlichen quadratischen oder rechteckigen Querschnitt ausgebildet sind und eine Länge von 3 bis 20 mm, eine Breite zwischen 1 und 10 mm sowie eine Dicke von 1 bis 5 mm aufweisen. Mithin ist es bevorzugt, wenn wenigstens 50%, weiter bevorzugt wenigstens 60% oder 70%, besonders bevorzugt wenigstens 80% und ganz besonders bevorzugt wenigstens 90% und höchst bevorzugt alle der bei dem Formpressen eingesetzten Schnitzel eine Länge von 3 bis 20 mm, eine Breite zwischen 1 und 10 mm sowie eine Dicke von 0,1 bis 0,5 mm aufweisen. Insbesondere ist es bevorzugt, dass die Schnitzel eine Länge von 3 bis 10 mm aufweisen.

Dichtelemente bzw. Stützringe mit guten Eigenschaften werden insbesondere erhalten, wenn die Schnitzel, welche Carbonfasern mit einer Länge von 3 bis 20 mm enthalten, 20 bis 70 Gew.-% Carbonfasern, bevorzugt 40 bis 70 Gew.-% Carbonfasern und besonders bevorzugt 60 bis 70 Gew.-%, wie etwa 65 Gew.-%, Carbonfasern sowie Rest auf 100 Gew.-% wenigstens eines thermoplastisches Kunststoffs enthalten.

Das Matrixmaterial wird in Abhängigkeit von den exakt gewünschten Eigenschaften ausgewählt. Geeignete Beispiele für das Matrixmaterial der Schnitzel und insbesondere der Schnitzel, welche Carbonfasern mit einer Länge von 3 bis 20 mm enthalten, sind thermoplastische Kunststoffe, welche aus der Gruppe ausgewählt sind, welche aus Polyphenylensulfiden, Perfluoralkoxypolymeren, Polyetheretherketonen, Polytetrafluorethylenen, Polyimiden, Polyamiden und beliebigen Mischungen aus zwei oder mehr der vorgenannten thermoplastische Kunststoffen besteht.

Gemäß einer ganz besonders bevorzugten Ausführungsform enthalten zumindest die Schnitzel, welche Carbonfasern mit einer Länge von 3 bis 20 mm enthalten, als thermoplastischen Kunststoff ein oder mehrere Polyetheretherketon(e).

Besonders gute Ergebnisse werden mit Schnitzeln, welche Carbonfasern mit einer Länge von 3 bis 20 mm enthalten, erhalten, welche 20 bis 70 Gew.-% Carbonfasern, bevorzugt 40 bis 70 Gew.-% Carbonfasern und besonders bevorzugt 60 bis 70 Gew.-%, wie etwa 65 Gew.-%, Carbonfasern sowie Rest auf 100 Gew.-% eines oder mehrerer Polyetheretherketon(e) enthalten.

In Weiterbildung des Erfindungsgedankens wird es vorgeschlagen, dass das Dichtelement und/oder der Stützring durch ein Verfahren erhältlich ist bzw. erhalten wird, welches die folgenden Schritte umfasst:
i) Bereitstellen wenigstens eines Bandes aus carbonfaserverstärktem Verbundwerkstoff, wobei die Carbonfasern in dem wenigstens einen Band zumindest im Wesentlichen parallel angeordnet sind,
ii) Schneiden des wenigstens eines Bandes quer zu der Carbonfaserrichtung zu Schnitzeln jeweils mit einer Länge von 3 bis 20 mm,
iii) Einbringen der Schnitzel in eine Form,
iv) Erhitzen der Schnitzel in der Form und
v) Verdichten der Schnitzel in der Form.

Vorzugsweise wird das wenigstens eine Band in dem Schritt ii) zu Schnitzeln jeweils mit einer Breite von 1 bis 10 mm geschnitten.

Um Dichtelemente bzw. Stützringe mit besonders homogenen Eigenschaften zu erhalten, ist es bevorzugt, die Schnitzel in dem Schritt iii) in einer Zufallsorientierung in die Form einzubringen.

In Abhängigkeit von dem eingesetzten Kunststoff werden die Schnitzel in dem Schritt iii) bevorzugt auf eine Temperatur von 120 bis 450°C und besonders bevorzugt auf eine Temperatur von 320 bis 450°C erhitzt.

Gute Ergebnisse insbesondere im Hinblick auf die Wärmeausdehnung und die Dichtigkeit werden insbesondere erhalten, wenn die Schnitzel in dem Schritt iv) mit einem Druck von 0,1 bis 30 MPa verdichtet werden.

Die erfindungsgemäßen Dichtelemente und Stützringe eignen sich insbesondere als Stützring für eine Dichtpackung, als Dichtungsring, als Ventilring, als Ventilplatte oder als Poppet eines Poppetventils.

Ein weiterer Gegenstand der vorliegenden Erfindung ist ein Kolbenkompressor, welche ein zuvor beschriebenes Dichtelement und/oder einen zuvor beschriebenen Stützring enthält.

## Patentansprüche

1. Dichtelement und/oder Stützring insbesondere für einen Kolbenkompressor gefertigt durch Formpressen von einer Mischung von Schnitzeln aus carbonfaserverstärktem Verbundwerkstoff, wobei zumindest ein Teil der Schnitzel Carbonfasern mit einer Länge von 3 bis 20 mm enthält.

2. Dichtelement und/oder Stützring nach Anspruch 1,
**dadurch gekennzeichnet, dass**
die Schnitzel, welche Carbonfasern mit einer Länge von 3 bis 20 mm enthalten, keine Fasern mit einer anderen Länge als den Carbonfasern mit einer Länge von 3 bis 20 mm enthalten.

3. Dichtelement und/oder Stützring nach Anspruch 1 oder 2,
**dadurch gekennzeichnet, dass**
wenigstens 50%, bevorzugt wenigstens 60% oder 70%, besonders bevorzugt wenigstens 80%, ganz besonders bevorzugt wenigstens 90% und höchst bevorzugt alle Schnitzel Carbonfasern mit einer Länge von 3 bis 20 mm enthalten.

4. Dichtelement und/oder Stützring nach zumindest einem der vorstehenden Ansprüche,
**dadurch gekennzeichnet, dass**
die Carbonfasern in den einzelnen Schnitzeln zumindest im Wesentlichen parallel zueinander angeordnet sind.

5. Dichtelement und/oder Stützring nach zumindest einem der vorstehenden Ansprüche,
**dadurch gekennzeichnet, dass**
die Schnitzel, welche Carbonfasern mit einer Länge von 3 bis 20 mm enthalten, 20 bis 70 Gew.-% Carbonfasern, bevorzugt 40 bis 70 Gew.-% Carbonfasern und besonders bevorzugt 60 bis 70 Gew.-% Carbonfasern sowie Rest auf 100 Gew.-% wenigstens eines thermoplastisches Kunststoffs enthalten.

6. Dichtelement und/oder Stützring nach zumindest einem der vorstehenden Ansprüche,
**dadurch gekennzeichnet, dass**
die Schnitzel, welche Carbonfasern mit einer Länge von 3 bis 20 mm enthalten, Carbonfasern mit einer Länge von 3 bis 10 mm enthalten.

7. Dichtelement und/oder Stützring nach zumindest einem der vorstehenden Ansprüche,
**dadurch gekennzeichnet, dass**
die Schnitzel, welche Carbonfasern mit einer Länge von 3 bis 20 mm enthalten, wenigstens einen thermoplastischen Kunststoff enthalten, welcher aus der Gruppe ausgewählt ist, welche aus Polyphenylensulfiden, Perfluoralkoxypolymeren, Polyetheretherketonen, Polytetrafluorethylenen, Polyimiden, Polyamiden und beliebigen Mischungen aus zwei oder mehr der vorgenannten thermoplastische Kunststoffen besteht.

8. Dichtelement und/oder Stützring nach zumindest einem der vorstehenden Ansprüche,
**dadurch gekennzeichnet, dass**
die Schnitzel, welche Carbonfasern mit einer Länge von 3 bis 20 mm enthalten, als thermoplastischen Kunststoff ein oder mehrere Polyetheretherketon(e) enthalten.

9. Dichtelement und/oder Stützring nach zumindest einem der vorstehenden Ansprüche,
**dadurch gekennzeichnet, dass**
das Dichtelement und/oder der Stützring durch ein Verfahren erhältlich ist, welches die folgenden Schritte umfasst:
i) Bereitstellen wenigstens eines Bandes aus carbonfaserverstärktem Verbundwerkstoff, wobei die Carbonfasern in dem wenigstens einen Band zumindest im Wesentlichen parallel angeordnet sind,
ii) Schneiden des wenigstens eines Bandes quer zu der Carbonfaserrichtung zu Schnitzeln jeweils mit einer Länge von 3 bis 20 mm,
iii) Einbringen der Schnitzel in eine Form,
iv) Erhitzen der Schnitzel in der Form und
v) Verdichten der Schnitzel in der Form.

10. Dichtelement und/oder Stützring nach Anspruch 9,
**dadurch gekennzeichnet, dass**
das wenigstens eine Band in dem Schritt ii) zu Schnitzeln jeweils mit einer Breite von 1 bis 10 mm geschnitten wird.

11. Dichtelement und/oder Stützring nach Anspruch 9 oder 10,
**dadurch gekennzeichnet, dass**
die Schnitzel in dem Schritt iii) in einer Zufallsorientierung in die Form eingebracht werden.

12. Dichtelement und/oder Stützring nach zumindest einem der Ansprüche 9 bis 11,
**dadurch gekennzeichnet, dass**
die Schnitzel in dem Schritt iii) auf eine Temperatur von 120 bis 450°C und bevorzugt auf eine Temperatur von 320 bis 450°C erhitzt werden.

13. Dichtelement und/oder Stützring nach zumindest einem der Ansprüche 9 bis 12,
**dadurch gekennzeichnet, dass**
die Schnitzel in dem Schritt iv) mit einem Druck von 0,1 bis 30 MPa verdichtet werden.

14. Dichtelement und/oder Stützring nach zumindest einem der vorstehenden Ansprüche,
**dadurch gekennzeichnet, dass**
es/er ein Stützring für eine Dichtpackung, ein Dichtungsring, ein Ventilring, eine Ventilplatte oder ein Poppet eines Poppetventils ist.

15. Kolbenkompressor enthaltend wenigstens ein Dichtelement und/oder Stützring nach zumindest einem der Ansprüche 1 bis 14.
